# EUROPEAN PATENT APPLICATION

(11) **EP 4 546 907 A1**
(43) Date of publication of application: **30.04.2025**
(21) Application number: 22948248.4
(22) Date of filing: 27.06.2022
(51) Int. Cl.: H04W 68/00

(54) **PAGING NEGOTIATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/101670
(87) International publication number: WO 2024/000124

(57) **Abstract**

Embodiments of the present invention provide a paging negotiation method. The method comprises: a first node sends auxiliary information to a second node, wherein the auxiliary information is used for indicating the capability of an access layer. Since the auxiliary information sent to the second node by the first node indicates the capability of the access layer, the second node can send a paging message to the first node on the basis of the capability of the access layer after receiving the auxiliary information; in this way, the sending of the paging message can adapt to the capability of the access layer, and compared with the mode of always sending the paging message under the condition of not determining the capability of the access layer, the present invention can save unnecessary signaling overhead.

## Description

### TECHNICAL FIELD

The present disclosure relates to, but is not limited to, a field of wireless communication technology, in particular to a method and an apparatus for negotiating a paging, a communication device, and a storage medium.

### BACKGROUND

In a wireless network communication technology, when a core network is to be sent data to a terminal, the core network may send a paging message to a base station. The base station sends the paging message in a cell that belongs to a tracking area (TA) list based on the TA list sent by the core network. The terminal receives the paging message sent by the base station during a paging occasion (PO). In the related art, a new terminal type called a reduced capability (RedCap) UE or NR-lite for short has been proposed. The terminal mainly has technical features of bandwidth reduction and receiving antenna reduction. In one scenario, in a case that the base station does not support access of a certain type of terminal, the core network may continue to send the paging message for the user in a TA range when the terminal of this type cannot reside, which may increase unnecessary signaling overhead between the core network and the base station.

### SUMMARY

Embodiments of the present disclosure provide a method and an apparatus for negotiating a paging, a communication device, and a storage medium.

According to a first aspect of embodiments of the present disclosure, a method for negotiating a paging is provided, performed by a first node, including:
sending auxiliary information to a second node, in which the auxiliary information is configured to indicate an access stratum (AS) capability.

In an embodiment, sending the auxiliary information to the second node includes:
sending the auxiliary information to the second node in a non-UE-associated service process,
in which the auxiliary information is configured to indicate a base station AS capability.

In an embodiment, the first node is a base station and the second node is a network function in a core network, in which sending the auxiliary information to the second node in the non-UE-associated service process includes:
sending the auxiliary information to the second node in a next generation (NG) interface setup process or an NG interface update process in a new radio (NR) system.

In an embodiment, sending the auxiliary information to the second node includes:
sending the auxiliary information to the second node via an NG setup request message;
   or,
sending the auxiliary information to the second node via a radio access configuration update message.

In an embodiment, the first node is a service base station and the second node is an adjacent base station, sending the auxiliary information to the second node in the non-UE-associated service process includes:
sending the auxiliary information to the second node in an Xn interface setup process or an Xn interface update process in an NR system.

In an embodiment, sending the auxiliary information to the second node includes:
sending the auxiliary information to the second node via an Xn setup request message;
   or,
sending the auxiliary information to the second node via an Xn setup response message;
   or,
sending the auxiliary information to the second node via a next generation-radio access network (NG-RAN) node configuration update message;
   or,
sending the auxiliary information to the second node via an NG-RAN node configuration update response message.

In an embodiment, the first node is a base station central unit (CU) and the second node is a base station distributed unit (DU), sending the auxiliary information to the second node in the non-UE-associated service process includes:
sending the auxiliary information to the second node in an F1 application protocol (F1AP) interface setup process or an F1AP interface update process in an NR system.

In an embodiment, sending the auxiliary information to the second node includes:
sending the auxiliary information to the second node via an F1 setup request message;
   or,
sending the auxiliary information to the second node via a next generation node B-distributed unit (GNB-DU) configuration update message.

In an embodiment, the auxiliary information indicates the AS capability with a base station as a granularity; or, the auxiliary information indicates the AS capability with a cell as a granularity.

In an embodiment, the auxiliary information indicates an identifier of whether a predefined type terminal is allowed or not allowed to access.

In an embodiment, the identifier is determined based on at least one of following system messages:
a master indication block (MIB);
a system information block 1 (SIB 1); or
an SIB1-bis.

In an embodiment, sending the auxiliary information to the second node includes:
sending the auxiliary information to the second node in a non-UE-associated service process,
in which the auxiliary information is configured to indicate a terminal AS capability.

In an embodiment, sending the auxiliary information to the second node includes:
sending the auxiliary information to the second node via a UERadioPagingInformation message;
   or,
sending the auxiliary information to the second node via a paging message.

In an embodiment, sending the auxiliary information to the second node via the paging message includes:
sending the auxiliary information to the second node via a core network paging message;
   or,
sending the auxiliary information to the second node via a radio access network paging message.

In an embodiment, sending the auxiliary information to the second node includes:
sending the auxiliary information to the second node in a UE-associated service process,
in which the auxiliary information is configured to indicate a base station AS capability.

In an embodiment, the first node is a base station and the second node is a network function of a core network, sending the auxiliary information to the second node in the UE-associated service process includes:
sending the auxiliary information to the second node in an NG-based handover process in an NR system.

In an embodiment, the first node is a target base station and the second node is a service base station, sending the auxiliary information to the second node in the UE-associated service process includes:
sending the auxiliary information to the second node in an Xn-based handover process in an NR system.

In an embodiment, sending the auxiliary information to the second node includes:
sending the auxiliary information to the second node via a handover failure message.

According to a second aspect of embodiments of the present disclosure, a method for negotiating a paging is provided, performed by a second node, including:
receiving auxiliary information sent by a first node, in which the auxiliary information is configured to indicate an AS capability.

In an embodiment, receiving the auxiliary information sent by the first node includes:
receiving the auxiliary information sent by the first node in a non-UE-associated service process,
in which the auxiliary information is configured to indicate a base station AS capability.

In an embodiment, a first node is a base station and the second node is a network function in a core network, receiving the auxiliary information sent by the first node in the non-UE-associated service process includes:
receiving the auxiliary information sent by the first node in an NG interface setup process or an NG interface update process in an NR system.

In an embodiment, receiving the auxiliary information sent by the first node includes:
receiving the auxiliary information sent by the first node via an NG setup request message;
   or,
receiving the auxiliary information sent by the first node via a radio access configuration update message.

In an embodiment, the first node is a service base station and the second node is an adjacent base station, receiving the auxiliary information sent by the first node in the non-UE-associated service process includes:
receiving the auxiliary information sent by the first node in an Xn interface setup process or an Xn interface update process in an NR system.

In an embodiment, receiving the auxiliary information sent by the first node includes:
receiving the auxiliary information sent by the first node via an Xn setup request message;
   **or,**
receiving the auxiliary information sent by the first node via an Xn setup response message;
   or,
receiving the auxiliary information sent by the first node via an NG-RAN node configuration update message;
   or,
receiving the auxiliary information sent by the first node via an NG-RAN node configuration update response message.

In an embodiment, the first node is a base station CU and the second node is a base station DU, receiving the auxiliary information sent by the first node in the non-UE-associated service process includes:
receiving the auxiliary information sent by the first node in an F1AP interface setup process or an F1AP interface update process in an NR system.

In an embodiment, receiving the auxiliary information sent by the first node includes:
receiving the auxiliary information sent by the first node via an F1 setup request message;
   or,
receiving the auxiliary information sent by the first node via a GNB-DU configuration update message.

In an embodiment, the auxiliary information indicates the AS capability with a base station as a granularity; or, the auxiliary information indicates the AS capability with a cell as a granularity.

In an embodiment, the auxiliary information indicates an identifier of whether a predefined type terminal is allowed or not allowed to access.

In an embodiment, the identifier is determined based on at least one of following system messages:
an MIB;
an SIB 1; or
an SIB1-bis.

In an embodiment, receiving the auxiliary information sent by the first node includes:
receiving the auxiliary information sent by the first node in a non-UE-associated service process,
in which the auxiliary information is configured to indicate a terminal AS capability.

In an embodiment, receiving the auxiliary information sent by the first node includes:
receiving the auxiliary information sent by the first node via a UERadioPagingInformation message;
   or,
receiving the auxiliary information sent by the first node via a paging message.

In an embodiment, receiving the auxiliary information sent by the first node via the paging message includes:
receiving the auxiliary information sent by the first node via a core network paging message;
   or,
receiving the auxiliary information sent by the first node via a radio access network paging message.

**In** an embodiment, receiving the auxiliary information sent by the first node includes:
receiving the auxiliary information sent by the first node in a UE-associated service process,
in which the auxiliary information is configured to indicate a base station AS capability.

In an embodiment, the first node is a base station and the second node is a network function of a core network, receiving the auxiliary information sent by the first node in the UE-associated service process includes:
receiving the auxiliary information sent by the first node in an NG-based handover process in an NR system.

In an embodiment, the first node is a target base station and the second node is a service base station, receiving the auxiliary information sent by the first node in the UE-associated service process includes:
**receiving** the auxiliary information sent by the first node in an Xn-based handover process in an NR system.

**In** an embodiment, receiving the auxiliary information sent by the first node includes:
receiving the auxiliary information sent by the first node via a handover failure message.

According to a third aspect of embodiments of the present disclosure, an apparatus for negotiating a paging is provided, including:
**a** sending module, configured to send auxiliary information to a second node, in which the auxiliary information is configured to indicate an AS capability.

According to a fourth aspect of embodiments of the present disclosure, an apparatus for negotiating a paging is provided, including:
a receiving module, configured to receive auxiliary information sent by a first node, in which the auxiliary information is configured to indicate an AS capability.

According to a fifth aspect of embodiments of the present disclosure, a communication device is provided, including:
a processor;
a memory for storing executable instructions that can be executed by the processor;
in which, the processor is configure to implement the method according to any one of embodiments of the present disclosure when running the executable instructions.

According to a sixth aspect of embodiments of the present disclosure, a computer storage medium for storing a computer executable program is provided. When the executable program is executed by a processor, the method according to any one of embodiments of the present disclosure is implemented.

**In** embodiments of the present disclosure, the first node sends the auxiliary information to the second node, in which the auxiliary information is configured to indicate the AS capability. Since the auxiliary information sent by the first node to the second node indicates the AS capability, the second node may send the paging message to the first node based on the AS capability after receiving the auxiliary information. In this way, the sending of the paging message may be adapted to the AS capability. Compared with the method of always sending a paging message when an AS capability is uncertain, an unnecessary signaling overhead may be saved.

### BRIEF DESCRIPTION OF THE DRAWINGS

FIG 1 is a schematic diagram of a wireless communication system according to an embodiment.
FIG 2 is a flowchart of a method for negotiating a paging according to an embodiment.
FIG 3 is a flowchart of a method for negotiating a paging according to an embodiment.
FIG 4 is a flowchart of a method for negotiating a paging according to an embodiment.
FIG 5 is a flowchart of a method for negotiating a paging according to an embodiment.
FIG 6 is a flowchart of a method for negotiating a paging according to an embodiment.
FIG 7 is a flowchart of a method for negotiating a paging according to an embodiment.
FIG 8 is a flowchart of a method for negotiating a paging according to an embodiment.
FIG 9 is a flowchart of a method for negotiating a paging according to an embodiment.
FIG 10 is a flowchart of a method for negotiating a paging according to an embodiment.
FIG 11 is a flowchart of a method for negotiating a paging according to an embodiment.
FIG 12 is a flowchart of a method for negotiating a paging according to an embodiment.
FIG 13 is a flowchart of a method for negotiating a paging according to an embodiment.
FIG 14 is a flowchart of a method for negotiating a paging according to an embodiment.
FIG 15 is a flowchart of a method for negotiating a paging according to an embodiment.
FIG 16 is a block diagram of an apparatus for negotiating a paging according to an embodiment.
FIG 17 is a block diagram of an apparatus for negotiating a paging according to an embodiment.
FIG 18 is a schematic diagram of a terminal according to an embodiment.
FIG 19 is a block diagram of a base station according to an embodiment.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the present disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first information may also be referred to as the second information, and likewise the second information may be referred to as the first information. Depending on the context, the word "if" used here can be interpreted as "when" or "upon", or "in response to determining".

For the sake of conciseness and an easy understanding, the terms "greater than" or "less than" are used to represent a size relationship. Those skilled in the art can understand that the term "greater than" also covers the meaning of "greater than or equal to" and the term "less than" also covers the meaning of "less than or equal to".

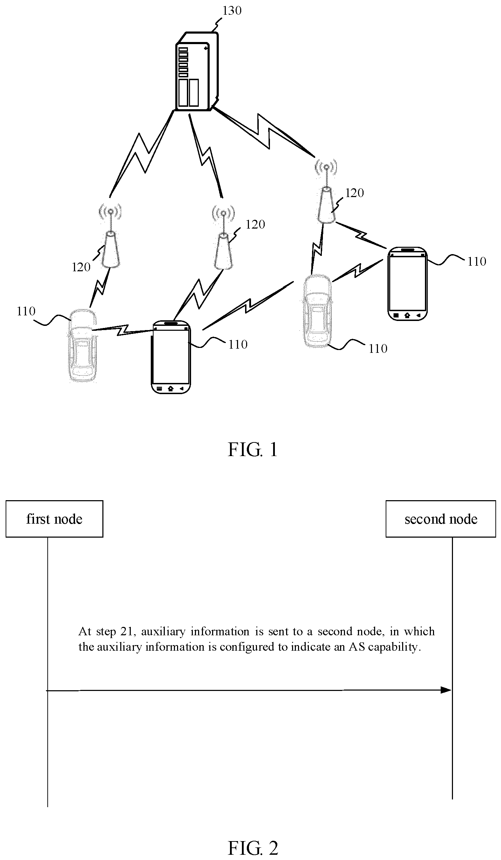

Please refer to FIG. 1, FIG 1 is a schematic diagram of a wireless communication system according to an embodiment of the disclosure. As shown in FIG 1, the wireless communication system is a communication system based on the mobile communication technology, and the wireless communication system may include: a plurality of user equipment (UE) 110 and a plurality of base stations 120.

The UE 110 may be a device that provides voice and/or data connectivity to a user. The UE 110 may communicate with one or more core networks via a radio access network (RAN). The UE 110 may be an Internet of Things (IoT) UE, such as a sensor device, a mobile phone, and a computer with the IoT UE. For example, the UE 110 may be a fixed, portable, pocket, handheld, computer built-in or vehicle-mounted device, for example, a station (STA), a subscriber unit, a subscriber station, a mobile station, a mobile, a remote station, an access point, a remote terminal, an access terminal, a user terminal, a user agent, a user device, or a user equipment. Or, the UE 110 may be a device for an unmanned aerial vehicle (UAV). Or, the UE 110 may also be a vehicle-mounted device, for example, a vehicle computer with a wireless communication function, or a wireless communication device externally coupled to the vehicle computer. Or, the UE 110 may be a roadside equipment, such as a street lamp, a signal lamp or other roadside devices with a wireless communication function.

The base station 120 may be a network-side device in a wireless communication system. The wireless communication system may be a 4th generation mobile communication technology (4G) system, also known as a Long Term Evolution (LTE) system; or, the wireless communication system may also be a 5th generation mobile communication technology (5G) system, also known as a new radio (NR) system or a 5G NR system; or, the wireless communication system may also be a next generation system of the 5G system. An access network in the 5G system may be called as a new generation-radio access network (NG-RAN).

The base station 120 may be an evolved Node B (eNB) in the 4G system, or a next generation node B (gNB) that adopts a centralized distributed architecture in the 5G system. When the base station 120 adopts the centralized distributed architecture, the base station 120 usually includes a central unit (CU) and at least two distributed units (DU). The CU is provided with a protocol stack of a packet data convergence protocol (PDCP) layer, a radio link control (RLC) layer, and a media access control (MAC) layer. The DU is provided with a protocol stack of a physical (PHY) layer. The embodiments of the present disclosure does not limit the specific implementation of the base station 120.

**A** wireless connection may be set up between the base station 120 and the UE 110 via a wireless air interface. In different implementations, the wireless air interface may be a wireless air interface based on a 4G standard; or, the wireless air interface may be a wireless air interface based on a 5G standard, for example, the wireless air interface may be a new radio air interface; or, the wireless air interface may also be a wireless air interface based on a next generation of a mobile communication network technology standard based on 5G

In some embodiments, an end to end (E2E) connection may also be established between the UEs 110, for example, a vehicle to vehicle (V2V) communication, a vehicle to infrastructure (V2I) communication, a vehicle to pedestrian (V2P) communication in a vehicle to everything (V2X) communication.

Here, the UE may be considered as a terminal of the following embodiments.

**In** some embodiments, the wireless communication system may also include a network management device 130.

A plurality of base stations 120 are connected to the network management device 130. The network management device may be a core network device in the wireless communication system, for example, the network management device 130 may be a mobility management entity (MME) in an evolved packet core (EPC). Or, the network management device may be other core network devices, such as a serving GateWay (SGW), a public data network GateWay (PGW), and a policy and charging rules function (PCRF), or a home subscriber server (HSS). The implementation form of the network management device 130 is not limited in embodiments of the present disclosure.

In order to facilitate the understanding of those skilled in the art, a plurality of implementations are listed in embodiments of the present disclosure to clearly illustrate the technical solution of embodiments of the present disclosure. Of course, those skilled in the art may understand that the plurality of implementations in embodiments of the present disclosure may be executed individually or in combination with the method of other embodiments in the present disclosure, or individually or in combination with some methods in other related arts, which is not limited in embodiments of the present disclosure.

In order to better understand the technical solution of any one of embodiments of the present disclosure, application scenarios in the related art are firstly described below.

In an embodiment, when a core network is to be sent data to a terminal, the core network may send a paging message to a base station. The base station sends the paging message in a cell that belongs to a tracking area (TA) list based on the TA list sent by the core network. The terminal receives the paging message sent by the base station during a paging occasion (PO). Generally, one TA may span a plurality of base stations or a plurality of cells corresponding to the plurality of base stations.

In an embodiment, a reduced capability (RedCap) UE has technical features of bandwidth reduction and receiving antenna reduction. A maximum bandwidth is as follows:
a first frequency range (FR 1, frequency range 1), for example, 20 MHz (uplink or downlink); or
a second frequency range (FR 2, frequency range 2), for example, 100MHz (uplink or downlink).

The number of antennas is as follows:
FR1 frequency division multiplexing, such as 1RX;
FR1 time division multiplexing, such as 2RX or 1RX; or
FR2, such as 2RX.

After introduction of a RedCap terminal in version R18, the bandwidth is further reduced to 5MHz or 20MHz as shown in Table 1.

**Table 1**

| Bandwidth | Category | Downlink | Uplink |
|---|---|---|---|
| BW1 | RF | 5MHz | 5MHz |
| | Control | 5MHz | 5MHz |
| | Data | 5MHz | 5MHz |
| BW3 | RF | 20MHz | 20MHz |
| | Control | 20MHz (SSB, PDCCH, CSI-RS, PTRS, and PRS) | 20MHz (PRACH, PUCCH, SRS, and PTRS) |
| | Data | 5MHz (PDSCH) | 5MHz (PUSCH) |

In a case that a base station does not support access to a certain type of terminal, for example, the base station does not support the access to a new Redcap user equipment of R18, under a situation that this type of terminal cannot reside, the core network does not confirm this situation from its perspective, and may continue to send the paging message to the user in a TA range, which may increase unnecessary signaling overhead between the core network and the base station. In order to reduce occurrence of the above situation, it may be considered to proceed a negotiation of auxiliary information between base stations, and between the base station and the core network. At the same time, the base station also requires to inform the core network of an access capability of an access stratum (AS).

As shown in FIG 2, a method for negotiating a paging is provided in the embodiment. The method is performed by a first node and includes a following step.

At step 21, auxiliary information is sent to a second node, in which the auxiliary information is configured to indicate an AS capability.

The node in the present disclosure may be a terminal, a base station, or a network function of a core network. For example, the first node is the base station, and the second node is the network function of the core network.

The terminal in the present disclosure may be, but is not limited to, a mobile phone, a wearable device, a vehicle-mounted terminal, a road side unit (RSU), a smart home terminal, an industrial sensing device and/or a medical device. In some embodiments, the terminal may be a RedCap terminal in a predefined version (for example, a RedCap terminal in version R17 or a RedCap terminal in version R18) or an NR terminal in a predefined version (for example, an NR terminal in version R17).

In an embodiment, the auxiliary information is sent to the second node, in which the auxiliary information is configured to indicate the AS capability, and the AS capability may be used to indicate whether a predefined type terminal is allowed or not allowed to access. Here, the predefined type terminal may be a RedCap terminal in version R18.

The RedCap terminal in version R18 may further be distinguished based on antennas, for example, the RedCap terminal in version R18 may be distinguished as a RedCap terminal in version R18 with 1RX antenna or a RedCap in version R18 with 2RX antenna.

It should be noted that in a case that the first node is the base station and the second node is the network function of the core network, the network function of the core network determines the AS capability based on the auxiliary information after receiving the auxiliary information. In a case that the auxiliary information indicates that the base station does not support the predefined type terminal to access the network, the network function of the core network may not send a page for paging the predefined type terminal to the base station, thus, a signaling overhead can be saved.

In an embodiment, the auxiliary information is sent to the second node in a non-UE-associated service process, in which the auxiliary information is configured to indicate a base station AS capability.

In an embodiment, the first node is the base station and the second node is the network function in the core network; and the auxiliary information is sent to the second node in a next generation (NG) interface setup process or an NG interface update process in an NR system, in which the auxiliary information is configured to indicate the base station AS capability.

In an embodiment, the first node is the base station and the second node is the network function in the core network; and the auxiliary information is sent to the second node via an NG setup request message in the NG interface setup process or the NG interface update process in the NR system, in which the auxiliary information is configured to indicate the base station AS capability.

In an embodiment, the first node is the base station and the second node is the network function in the core network; and the auxiliary information is sent to the second node via a radio access configuration update message in the NG interface setup process or the NG interface update process in the NR system, in which the auxiliary information is configured to indicate the base station AS capability.

In an embodiment, the first node is a service base station and the second node is an adjacent base station; and the auxiliary information is sent to the second node in an Xn interface setup process or an Xn interface update process in an NR system, in which the auxiliary information is configured to indicate the base station AS capability.

In an embodiment, the first node is the service base station and the second node is the adjacent base station; and the auxiliary information is sent to the second node via an Xn setup request message in the Xn interface setup process or the Xn interface update process in the NR system, in which the auxiliary information is configured to indicate the base station AS capability.

In an embodiment, the first node is the service base station and the second node is the adjacent base station; and the auxiliary information is sent to the second node via an Xn setup response message in the Xn interface setup process or the Xn interface update process in the NR system, in which the auxiliary information is configured to indicate the base station AS capability.

In an embodiment, the first node is the service base station and the second node is the adjacent base station; and the auxiliary information is sent to the second node via a next generation-radio access network (NG-RAN) node configuration update message in the Xn interface setup process or the Xn interface update process in the NR system, in which the auxiliary information is configured to indicate the base station AS capability.

In an embodiment, the first node is the service base station and the second node is the adjacent base station; and the auxiliary information is sent to the second node via an NG-RAN node configuration update response message in the Xn interface setup process or the Xn interface update process in the NR system, in which the auxiliary information is configured to indicate the base station AS capability.

In an embodiment, the first node is a base station central unit (CU)and the second node is a base station distributed unit (DU); and the auxiliary information is sent to the second node in an F1 application protocol (F1AP) interface setup process or an F1AP interface update process in an NR system, in which the auxiliary information is configured to indicate the base station AS capability.

In an embodiment, the first node is the base station CU and the second node is the base station DU; and the auxiliary information is sent to the second node via an F1 setup request message in the F1AP interface setup process or the F1AP interface update process in the NR system, in which the auxiliary information is configured to indicate the base station AS capability.

In an embodiment, the first node is the base station CU and the second node is the base station DU; and the auxiliary information is sent to the second node via a next generation node B-distributed unit (GNB-DU) configuration update message in the F1AP interface setup process or the F1AP interface update process in the NR system, in which the auxiliary information is configured to indicate the base station AS capability.

In an embodiment, the auxiliary information indicates the AS capability with a base station as a granularity. Illustratively, the auxiliary information indicates a mapping relationship between a base station and an AS capability of the base station.

In an embodiment, the auxiliary information indicates the AS capability with a cell as a granularity. Illustratively, the auxiliary information indicates a mapping relationship between a plurality of cells included in a base station and an AS capability of each of the plurality of cells.

**In** an embodiment, the auxiliary information indicates an identifier of whether a predefined type terminal is allowed or not allowed to access. The identifier is determined based on at least one of following system messages:
a master indication block (MIB);
a system information block 1 (SIB 1); or
an SIB1-bis.
Illustratively, the identifier may be one of following identifiers.

The identifier may be an identifier of whether the predefined type terminal is allowed or not allowed to access determined based on the MIB.

The identifier may be an identifier of whether the predefined type terminal is allowed or not allowed to access determined based on the SIB1 and the MIB.

The identifier may be an identifier of whether a RedCap terminal in version R17 with a single antenna is allowed or not allowed to access determined based on the SIB1 and the MIB. It is noted that the identifier of whether the RedCap terminal in version R17 with a single antenna may include two identifiers in this scenario. Illustratively, a cell access restriction information (cellbar) identifier of the RedCap terminal in version R17 with a single antenna in the SIB1 and cellbar identifiers of all terminals in the MIB may be informed respectively, or may be informed based on an operation result of an "and" operation between the cellbar identifier the RedCap terminal in version R17 with a single antenna in the SIB1 and the cellbar identifiers of all terminals in the MIB. In this way, after performing the "and" operation, the identifier may be indicated via one bit.

The identifier may be an identifier of whether a RedCap terminal in version R17 with two antennas is allowed or not allowed to access determined based on the SIB1 and the MIB. It is noted that the dentifier of whether the RedCap terminal in version R17 with two antennas is allowed or not allowed to access determined based on the SIB1 and the MIBmay include two identifiers in this scenario. A cellbar identifier of the RedCap terminal in version R17 with two antennas in the SIB1 and cellbar identifiers of all terminals in the MIB may be informed respectively, or may be informed based on an operation result of an "and" operation between the cellbar identifier of the RedCap terminal in version R17 with two antennas in the SIB1 and the cellbar identifiers of all terminals in the MIB. In this way, after performing the "and" operation, the identifier may be indicated via one bit.

The identifier of whether the predefined type terminal is allowed or not allowed to access determined based on the SIB1 and the MIB may be further subdivided according to a receiving antenna, for example, an identifier of whether a RedCap terminal in version R17 with a single antenna is allowed or not allowed to access determined based on the SIB1 and the MIB, and an identifier of whether a RedCap terminal in version R17 with two antennas is allowed or not allowed to access determined based on the SIB1 and the MIB. The identifier may be indicated with two bits respectively in this case.

The identifier may be an identifier of whether a RedCap terminal in version R18 with antenna is allowed or not allowed to access determined based on the SIB1 and the MIB. It is noted that the identifier of whether the RedCap terminal in version R18 with antenna may include two identifiers in this scenario. Illustratively, a cellbar identifier of the RedCap terminal in version R18 with antenna in SIB1 and cellbar identifiers of all terminals in the MIB may be informed respectively, or may be informed based on an operation result of an "and" operation between the cellbar identifier of the RedCap terminal in version R18 with antenna in the SIB1 and the cellbar identifiers of all terminals in the MIB. In this way, after performing the "and" operation, the identifier may be indicated by one bit.

The identifier may be an identifier of whether a RedCap terminal in version R18 is allowed or not allowed to access determined based on the SIB1-bis, in which the SIB1-bis is a specific system message obtained by the RedCap terminal in version R18, and the system message carries admission control information of the RedCap terminal in version R18.

The identifier be an identifier of whether a RedCap terminal in version R18 with antenna is allowed or not allowed to access determined based on the SIB1-bis and the MIB. The identifier of whether the RedCap terminal in version R18 with antenna may include two identifiers in this scenario. Illustratively, a cellbar identifier of the RedCap terminal in version R18 with antenna in the SIB1 and cellbar identifiers of all terminals in the MIB may be informed respectively, or may be informed based on an operation result of an "and" opreration between the cellbar identifier of the RedCap terminal in version R18 with antenna in the SIB1 and the cellbar identifiers of all terminals in the MIB.

The identifier of whether a predefined type terminal is allowed or not allowed to access determined based on the SIB1-bis and the MIB may be further subdivided according to a receiving antenna, for example, an identifier of whether a RedCap terminal in version R18 with a single antenna determined based on the SIB1-bis and the MIB and an identifier of whether a RedCap terminal in version R18 with two antennas determined based on the SIB1-bis and the MIB, which may be indicated respectively with two bits in this case.

**In** an embodiment, the auxiliary information is sent to the second node in a non-UE-associated service process, in which the auxiliary information is configured to indicate a terminal AS capability.

**In** an embodiment, the auxiliary information is sent to the second node via a UERadioPagingInformation message in the non-UE-associated service process, in which the auxiliary information is configured to indicate the terminal AS capability. The first node is the base station and the second node is the network function of the core network. One field may be added to an information field of the UERadioPagingInformation message. The field may indicate that the terminal is a RedCap terminal in version R18; or, may be further refined to indicate that the terminal is a RedCap terminal in version R18 with 1RX antenna or a RedCap terminal in version R18 with 2RX antenna.

In an embodiment, the auxiliary information is sent to the second node via a paging message in the non-UE-associated service process, in which the auxiliary information is configured to indicate the terminal AS capability.

In an embodiment, the auxiliary information is sent to the second node via a core network paging message in the non-UE-associated service process, in which the auxiliary information is configured to indicate the terminal AS capability. The first node is the network function of the core network and the second node is the base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18, or the terminal attribute is further refined to indicate a RedCap terminal in version R18 with 1RX antenna or a RedCap terminal in version R18 with 2RX antenna.

In an embodiment, the auxiliary information is sent to the second node via a radio access network paging message in the non-UE-associated service process, in which the auxiliary information is configured to indicate the terminal AS capability. The first node is an anchor base station and the second node is a service base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18, or the terminal attribute is further refined to indicate a RedCap terminal in version R18 with 1RX antenna or a RedCap terminal in version R18 with 2RX antenna.

**In** an embodiment, the auxiliary information is sent to the second node in a UE-associated service process, in which the auxiliary information is configured to indicate a base station AS capability.

In an embodiment, the first node is the base station and the second node is the network function in the core network. The auxiliary information is sent to the second node in an NG-based handover process in an NR system, in which the auxiliary information is configured to indicate the base station AS capability.

In an embodiment, the first node is a target base station and the second node is a service base station; and the auxiliary information is sent to the second node in an Xn-based handover process in an NR system, in which the auxiliary information is configured to indicate the base station AS capability.

In an embodiment, the first node is the base station and the second node is the network function of the core network. The auxiliary information is sent to the second node via a handover failure message in the NG-based handover process in the NR system, in which the auxiliary information is configured to indicate the base station AS capability.

In an embodiment, the first node is a target base station and the second node is a service base station. The auxiliary information is sent to the second node via a handover failure message in the Xn-based handover process in the NR system, in which the auxiliary information is configured to indicate the base station AS capability.

**In** an embodiment, the auxiliary information is indicated by a cause value of a handover failure.

**In** embodiments of the present disclosure, the first node sends the auxiliary information to the second node, in which the auxiliary information is configured to indicate the AS capability. Since the auxiliary information sent by the first node to the second node indicates the AS capability, the second node may send the paging message to the first node based on the AS capability after receiving the auxiliary information. In this way, the sending of the paging message may be adapted to the AS capability. Compared with the method of always sending a paging message when an AS capability is uncertain, an unnecessary signaling overhead may be saved.

**It** should be noted that those skilled in the art may understand that the method in embodiments of the present disclosure may be executed alone, or together with some methods in embodiments of the present disclosure or together with some methods in the related art.

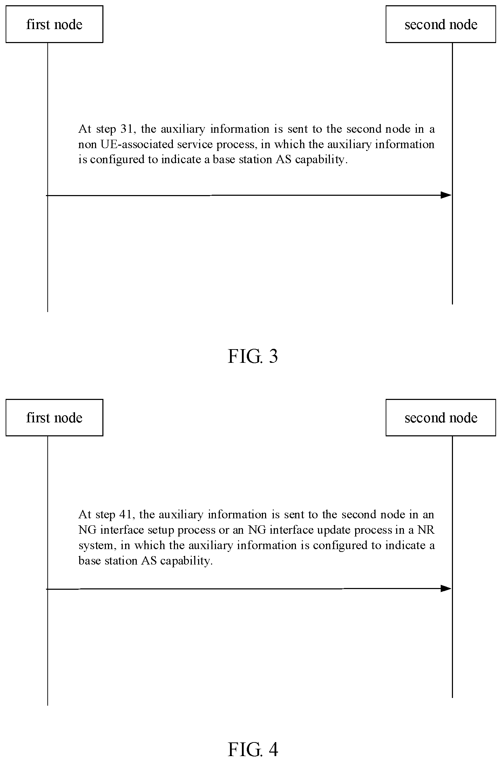

As shown in FIG 3, a method for negotiating a paging is provided in the embodiment. The method is performed by a first node and includes a following step.

At step 31, the auxiliary information is sent to the second node in a non-UE-associated service process.

The auxiliary information is configured to indicate a base station AS capability.

In an embodiment, the first node is a base station and the second node is a network function in a core network; and the auxiliary information is sent to the second node in an NG interface setup process or an NG interface update process in a NR system, in which the auxiliary information is configured to indicate a base station AS capability.

In an embodiment, the first node is a service base station and the second node is an adjacent base station; and the auxiliary information is sent to the second node in an Xn interface setup process or an Xn interface update process in an NR system, in which the auxiliary information is configured to indicate a base station AS capability.

In an embodiment, the first node is a base station CU and the second node is a base station DU; and the auxiliary information is sent to the second node in an F1AP interface setup process or an F1AP interface update process in an NR system, in which the auxiliary information is configured to indicate a base station AS capability.

It should be noted that those skilled in the art may understand that the method in embodiments of the present disclosure may be executed alone, or together with some methods in embodiments of the present disclosure or together with some.

As shown in FIG 4, a method for negotiating a paging is provided in the embodiment. The method is performed by a first node and includes a following step.

At step 41, the auxiliary information is sent to the second node in an NG interface setup process or an NG interface update process in a NR system, in which the auxiliary information is configured to indicate a base station AS capability.

In an embodiment, the first node is a base station and the second node is a network function in a core network; and the auxiliary information is sent to the second node in the NG interface setup process or the NG interface update process in the NR system, in which the auxiliary information is configured to indicate the base station AS capability.

In an embodiment, the first node is a base station and the second node is a network function in a core network; and the auxiliary information is sent to the second node via an NG setup request message in the NG interface setup process or the NG interface update process in the NR system, in which the auxiliary information is configured to indicate the base station AS capability.

In an embodiment, the first node is a base station and the second node is a network function in a core network; and the auxiliary information is sent to the second node via a radio access configuration update message in the NG interface setup process or the NG interface update process in the NR system, in which the auxiliary information is configured to indicate the base station AS capability.

It should be noted that those skilled in the art may understand that the method in embodiments of the present disclosure may be executed alone, or together with some methods in embodiments of the present disclosure or together with some.

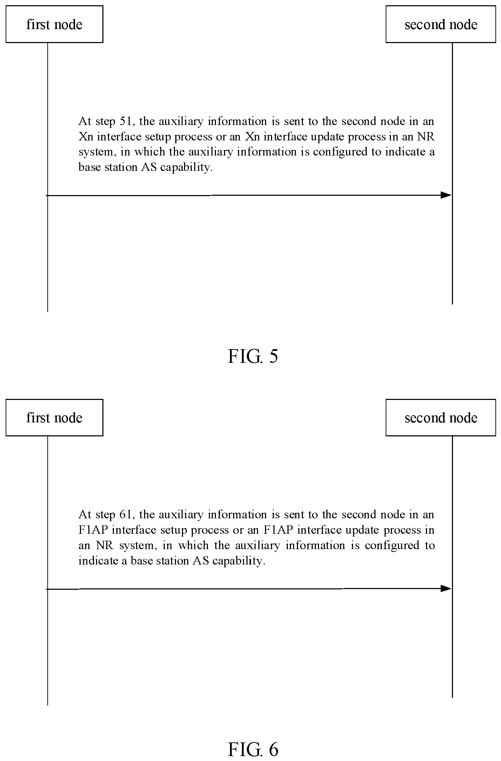

As shown in FIG 5, a method for negotiating a paging is provided in the embodiment. The method is performed by a first node and includes a following step.

At step 51, the auxiliary information is sent to the second node in an Xn interface setup process or an Xn interface update process in an NR system, in which the auxiliary information is configured to indicate a base station AS capability.

In an embodiment, the first node is a service base station and the second node is an adjacent base station; and the auxiliary information is sent to the second node in an Xn interface setup process or an Xn interface update process in an NR system, in which the auxiliary information is configured to indicate a base station AS capability.

In an embodiment, the first node is a service base station and the second node is an adjacent base station; and the auxiliary information is sent to the second node via an Xn setup request message in the Xn interface setup process or the Xn interface update process in the NR system, in which the auxiliary information is configured to indicate the base station AS capability.

In an embodiment, the first node is a service base station and the second node is an adjacent base station; and the auxiliary information is sent to the second node via an Xn setup response message in the Xn interface setup process or the Xn interface update process in the NR system, in which the auxiliary information is configured to indicate the base station AS capability.

In an embodiment, the first node is a service base station and the second node is an adjacent base station; and the auxiliary information is sent to the second node via an NG-RAN node configuration update message in the Xn interface setup process or the Xn interface update process in the NR system, in which the auxiliary information is configured to indicate the base station AS capability.

In an embodiment, the first node is a service base station and the second node is an adjacent base station; and the auxiliary information is sent to the second node via an NG-RAN node configuration update response message in the Xn interface setup process or the Xn interface update process in the NR system, in which the auxiliary information is configured to indicate the base station AS capability.

**It** should be noted that those skilled in the art may understand that the method in embodiments of the present disclosure may be executed alone, or together with some methods in embodiments of the present disclosure or together with some.

As shown in FIG 6, a method for negotiating a paging is provided in the embodiment. The method is performed by a first node and includes a following step.

At step 61, the auxiliary information is sent to the second node in an F1AP interface setup process or an F1AP interface update process in an NR system, in which the auxiliary information is configured to indicate a base station AS capability.

In an embodiment, the first node is a base station CU and the second node is a base station DU; and the auxiliary information is sent to the second node in the F1AP interface setup process or the F1AP interface update process in the NR system, in which the auxiliary information is configured to indicate the base station AS capability.

In an embodiment, the first node is a base station CU and the second node is a base station DU; and the auxiliary information is sent to the second node via an F1 setup request message in the F1AP interface setup process or the F1AP interface update process in the NR system, in which the auxiliary information is configured to indicate the base station AS capability.

In an embodiment, the first node is a base station CU and the second node is a base station DU; and the auxiliary information is sent to the second node via a GNB-DU configuration update message in the F1AP interface setup process or the F1AP interface update process in the NR system, in which the auxiliary information is configured to indicate the base station AS capability.

It should be noted that those skilled in the art may understand that the method in embodiments of the present disclosure may be executed alone, or together with some methods in embodiments of the present disclosure or together with some.

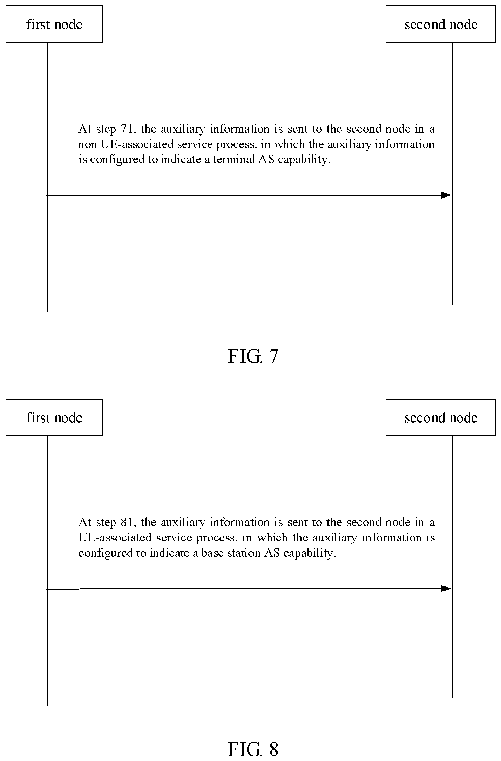

As shown in FIG 7, a method for negotiating a paging is provided in the embodiment. The method is performed by a first node and includes a following step.

At step 71, the auxiliary information is sent to the second node in a non-UE-associated service process.

The auxiliary information is configured to indicate a terminal AS capability.

**In** an embodiment, the auxiliary information is sent to the second node in the non-UE-associated service process, in which the auxiliary information is configured to indicate the terminal AS capability.

**In** an embodiment, the auxiliary information is sent to the second node via a UERadioPagingInformation message in the non-UE-associated service process, in which the auxiliary information is configured to indicate the terminal AS capability. The first node is a base station and the second node is a network function of a core network. One field may be added to an information field of the UERadioPagingInformation message. The field indicates that the terminal is a RedCap terminal in version R18.

In an embodiment, the auxiliary information is sent to the second node via a paging message in a non-UE-associated service process, in which the auxiliary information is configured to indicate a terminal AS capability.

In an embodiment, the auxiliary information is sent to the second node via a core network paging message in the non-UE-associated service process, in which the auxiliary information is configured to indicate the terminal AS capability. The first node is the network function of the core network and the second node is the base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18.

In an embodiment, the auxiliary information is sent to the second node via a radio access network paging message in the non-UE-associated service process, in which the auxiliary information is configured to indicate the terminal AS capability. The first node is an anchor base station and the second node is a service base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18.

It should be noted that those skilled in the art may understand that the method in embodiments of the present disclosure may be executed alone, or together with some methods in embodiments of the present disclosure or together with some.

As shown in FIG 8, a method for negotiating a paging is provided in the embodiment. The method is performed by a first node and includes a following step.

At step 81, the auxiliary information is sent to the second node in a UE-associated service process.

The auxiliary information is configured to indicate a base station AS capability.

**In** an embodiment, the auxiliary information is sent to the second node in the UE-associated service process, in which the auxiliary information is configured to indicate the base station AS capability.

In an embodiment, the first node is a base station and the second node is a network function in a core network; and the auxiliary information is sent to the second node in an NG-based handover process in an NR system, in which the auxiliary information is configured to indicate the base station AS capability.

In an embodiment, the first node is a target base station and the second node is a service base station; and the auxiliary information is sent to the second node in an Xn-based handover process in an NR system, in which the auxiliary information is configured to indicate the base station AS capability.

In an embodiment, the first node is a base station and the second node is a network function in a core network; and the auxiliary information is sent to the second node via a handover failure message in the NG-based handover process in the NR system, in which the auxiliary information is configured to indicate the base station AS capability.

In an embodiment, the first node is a target base station and the second node is a service base station; and the auxiliary information is sent to the second node via a handover failure message in the Xn-based handover process in the NR system, in which the auxiliary information is configured to indicate the base station AS capability.

In an embodiment, the auxiliary information is indicated by a cause value of a handover failure.

It should be noted that those skilled in the art may understand that the method in embodiments of the present disclosure may be executed alone, or together with some methods in embodiments of the present disclosure or together with some.

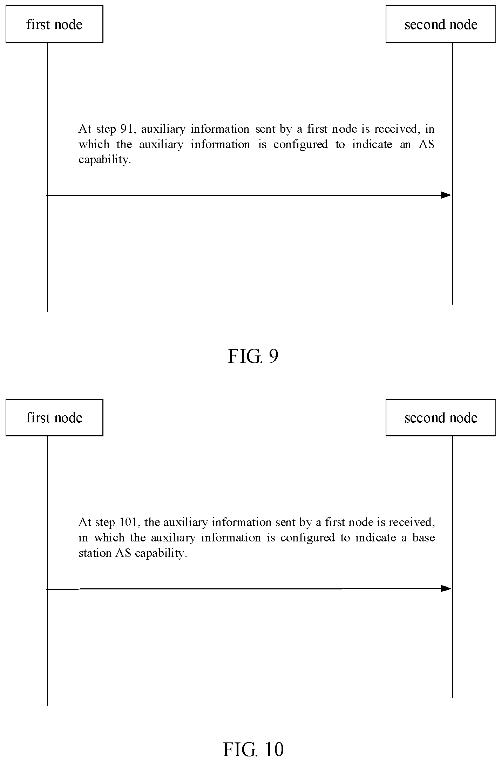

As shown in FIG 9, a method for negotiating a paging is provided in the embodiment. The method is performed by a second node and includes a following step.

At step 91, auxiliary information sent by a first node is received, in which the auxiliary information is configured to indicate an AS capability.

The node in the present disclosure may be a terminal, a base station, or a network function of a core network. For example, the first node is the base station, and the second node is the network function of the core network.

The terminal in the present disclosure may be, but is not limited to, a mobile phone, a wearable device, a vehicle-mounted terminal, an RSU, a smart home terminal, an industrial sensing device and/or a medical device. In some embodiments, the terminal may be a RedCap terminal in a predefined version (for example, a RedCap terminal in version R17 or a RedCap terminal in version R18) or an NR terminal in a predefined version (for example, an NR terminal in version R17).

In an embodiment, the auxiliary information sent by the first node is received, in which the auxiliary information is configured to indicate the AS capability, and the AS capability may be used to indicate whether a predefined type terminal is allowed or not allowed to access. Here, the predefined type terminal may be a RedCap terminal in version R18.

It should be noted that in a case that the first node is the base station and the second node is the network function of the core network, the network function of the core network determines the AS capability based on the auxiliary information after receiving the auxiliary information. In a case that the auxiliary information indicates that the base station does not support the predefined type terminal to access the network, the network function of the core network may not send a page for paging the predefined type terminal to the base station, thus, a signaling overhead can be saved.

In an embodiment, the auxiliary information sent by the first node is received in a non-UE-associated service process, in which the auxiliary information is configured to indicate a base station AS capability.

In an embodiment, the first node is the base station and the second node is the network function in the core network; and the auxiliary information sent by the first node is received in an NG interface setup process or an NG interface update process in an NR system, in which the auxiliary information is configured to indicate the base station AS capability.

In an embodiment, the first node is the base station and the second node is the network function in the core network; and the auxiliary information sent by the first node is received via an NG setup request message in the NG interface setup process or the NG interface update process in the NR system, in which the auxiliary information is configured to indicate the base station AS capability.

In an embodiment, the first node is the base station and the second node is the network function in the core network; and the auxiliary information sent by the first node is received via a radio access configuration update message in the NG interface setup process or the NG interface update process in the NR system, in which the auxiliary information is configured to indicate the base station AS capability.

In an embodiment, the first node is a service base station and the second node is an adjacent base station; and the auxiliary information sent by the first node is received in an Xn interface setup process or an Xn interface update process in an NR system, in which the auxiliary information is configured to indicate the base station AS capability.

In an embodiment, the first node is the service base station and the second node is the adjacent base station; and the auxiliary information sent by the first node is received via an Xn setup request message in the Xn interface setup process or the Xn interface update process in the NR system, in which the auxiliary information is configured to indicate the base station AS capability.

In an embodiment, the first node is the service base station and the second node is the adjacent base station; and the auxiliary information sent by the first node is received via an Xn setup response message in the Xn interface setup process or the Xn interface update process in the NR system, in which the auxiliary information is configured to indicate the base station AS capability.

In an embodiment, the first node is the service base station and the second node is the adjacent base station; and the auxiliary information sent by the first node is received via an NG-RAN node configuration update message in the Xn interface setup process or the Xn interface update process in the NR system, in which the auxiliary information is configured to indicate the base station AS capability.

In an embodiment, the first node is the service base station and the second node is the adjacent base station; and the auxiliary information sent by the first node is received via an NG-RAN node configuration update response message in the Xn interface setup process or the Xn interface update process in the NR system, in which the auxiliary information is configured to indicate the base station AS capability.

In an embodiment, the first node is a base station CU and the second node is a base station DU; and the auxiliary information sent by the first node is received in an F1AP interface setup process or an F1AP interface update process in the NR system, in which the auxiliary information is configured to indicate the base station AS capability.

In an embodiment, the first node is the base station CU and the second node is the base station DU; and the auxiliary information sent by the first node is received via an F1 setup request message in the F1AP interface setup process or the F1AP interface update process in the NR system, in which the auxiliary information is configured to indicate the base station AS capability.

In an embodiment, the first node is the base station CU and the second node is the base station DU; and the auxiliary information sent by the first node is received via a GNB-DU configuration update message in the F1AP interface setup process or the F1AP interface update process in the NR system, in which the auxiliary information is configured to indicate the base station AS capability.

In an embodiment, the auxiliary information indicates the AS capability with a base station as a granularity. Illustratively, the auxiliary information indicates a mapping relationship between a base station and an AS capability of the base station.

In an embodiment, the auxiliary information indicates the AS capability with a cell as a granularity. Illustratively, the auxiliary information indicates a mapping relationship between a plurality of cells included in a base station and an AS capability of each of the plurality of cells.

In an embodiment, the auxiliary information indicates an identifier of whether a predefined type terminal is allowed or not allowed to access. The identifier is determined based on at least one of following system messages:
an MIB;
an SIB 1; or
an SIB1-bis.

Illustratively, the identifier may be one of following identifiers.

The identifier may be an identifier of whether the predefined type terminal is allowed or not allowed to access determined based on the MIB.

The identifier may be an identifier of whether the predefined type terminal is allowed or not allowed to access determined based on the SIB1 and the MIB.

The identifier may be an identifier of whether a RedCap terminal in version R17 with a single antenna is allowed or not allowed to access determined based on the SIB1 and the MIB. It is noted that the identifier of whether the RedCap terminal in version R17 with a single antenna may include two identifiers in this scenario. Illustratively, a cell access restriction information (cellbar) identifier of the RedCap terminal in version R17 with a single antenna in the SIB1 and cellbar identifiers of all terminals in the MIB may be informed respectively, or may be informed based on an operation result of an "and" operation between the cellbar identifier the RedCap terminal in version R17 with a single antenna in the SIB1 and the cellbar identifiers of all terminals in the MIB.

The identifier may be an identifier of whether a RedCap terminal in version R17 with two antennas is allowed or not allowed to access determined based on the SIB1 and the MIB. It is noted that the dentifier of whether the RedCap terminal in version R17 with two antennas is allowed or not allowed to access determined based on the SIB1 and the MIBmay include two identifiers in this scenario. A cellbar identifier of the RedCap terminal in version R17 with two antennas in the SIB1 and cellbar identifiers of all terminals in the MIB may be informed respectively, or may be informed based on an operation result of an "and" operation between the cellbar identifier of the RedCap terminal in version R17 with two antennas in the SIB 1 and the cellbar identifiers of all terminals in the MIB.

The identifier may be an identifier of whether a RedCap terminal in version R18 with antenna is allowed or not allowed to access determined based on the SIB 1 and the MIB. It is noted that the identifier of whether the RedCap terminal in version R18 with antenna may include two identifiers in this scenario. Illustratively, a cellbar identifier of the RedCap terminal in version R18 with antenna in SIB1 and cellbar identifiers of all terminals in the MIB may be informed respectively, or may be informed based on an operation result of an "and" operation between the cellbar identifier of the RedCap terminal in version R18 with antenna in the SIB1 and the cellbar identifiers of all terminals in the MIB.

The identifier may be an identifier of whether a RedCap terminal in version R18 is allowed or not allowed to access determined based on the SIB1-bis, in which the SIB1-bis is a specific system message obtained by the RedCap terminal in version R18, and the system message carries admission control information of the RedCap terminal in version R18.

The identifier be an identifier of whether a RedCap terminal in version R18 with antenna is allowed or not allowed to access determined based on the SIB1-bis and the MIB. The identifier of whether the RedCap terminal in version R18 with antenna may include two identifiers in this scenario. Illustratively, a cellbar identifier of the RedCap terminal in version R18 with antenna in the SIB1 and cellbar identifiers of all terminals in the MIB may be informed respectively, or may be informed based on an operation result of an "and" opreration between the cellbar identifier of the RedCap terminal in version R18 with antenna in the SIB1 and the cellbar identifiers of all terminals in the MIB.

In an embodiment, the auxiliary information sent by the first node is received in a non-UE-associated service process, in which the auxiliary information is configured to indicate a terminal AS capability.

In an embodiment, the auxiliary information sent by the first node is received via a UERadioPagingInformation message in the non-UE-associated service process, in which the auxiliary information is configured to indicate the terminal AS capability. The first node is the base station and the second node is the network function of the core network. One field may be added to an information field of the UERadioPagingInformation message. The field may indicate that the terminal is a RedCap terminal in version R18.

In an embodiment, the auxiliary information sent by the first node is received via a paging message in the non-UE-associated service process, in which the auxiliary information is configured to indicate the terminal AS capability.

In an embodiment, the auxiliary information sent by the first node is received via a core network paging message in the non-UE-associated service process, in which the auxiliary information is configured to indicate the terminal AS capability. The first node is the network function of the core network and the second node is the base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18.

In an embodiment, the auxiliary information sent by the first node is received via a radio access network paging message in the non-UE-associated service process, in which the auxiliary information is configured to indicate the terminal AS capability. The first node is an anchor base station and the second node is a service base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18.

In an embodiment, the auxiliary information sent by the first node is received in a UE-associated service process, in which the auxiliary information is configured to indicate a base station AS capability.

**In** an embodiment, the first node is the base station and the second node is the network function of the core network. The auxiliary information sent by the first node is received in an NG-based handover process in an NR system, in which the auxiliary information is configured to indicate the base station AS capability.

**In** an embodiment, the first node is a target base station and the second node is a service base station; and the auxiliary information sent by the first node is received in an Xn-based handover process in an NR system, in which the auxiliary information is configured to indicate the base station AS capability.

**In** an embodiment, the first node is the base station and the second node is the network function in the core network. The auxiliary information sent by the first node is received via a handover failure message in the NG-based handover process in the NR system, in which the auxiliary information is configured to indicate the base station AS capability.

In an embodiment, the first node is a target base station and the second node is a service base station. The auxiliary information sent by the first node is received via a handover failure message in the Xn-based handover process in the NR system, in which the auxiliary information is configured to indicate the base station AS capability.

**In** an embodiment, the auxiliary information is indicated by a cause value of a handover failure.

It should be noted that those skilled in the art may understand that the method in embodiments of the present disclosure may be executed alone, or together with some methods in embodiments of the present disclosure or together with some.

As shown in FIG 10, a method for negotiating a paging is provided in the embodiment. The method is performed by a second node and includes a following step.

At step 101, the auxiliary information sent by a first node is received in a non-UE-associated service process.

The auxiliary information is configured to indicate a base station AS capability.

In an embodiment, the first node is a base station and the second node is a network function in a core network; and the auxiliary information sent by the first node is received in an NG interface setup process or an NG interface update process in a NR system, in which the auxiliary information is configured to indicate a base station AS capability.

In an embodiment, the first node is a service base station and the second node is an adjacent base station; and the auxiliary information sent by the first node is received in an Xn interface setup process or an Xn interface update process in an NR system, in which the auxiliary information is configured to indicate a base station AS capability.

In an embodiment, the first node is a base station CU and the second node is a base station DU; and the auxiliary information sent by the first node is received in an F1AP interface setup process or an F1AP interface update process in an NR system, in which the auxiliary information is configured to indicate a base station AS capability.

It should be noted that those skilled in the art may understand that the method in embodiments of the present disclosure may be executed alone, or together with some methods in embodiments of the present disclosure or together with some.

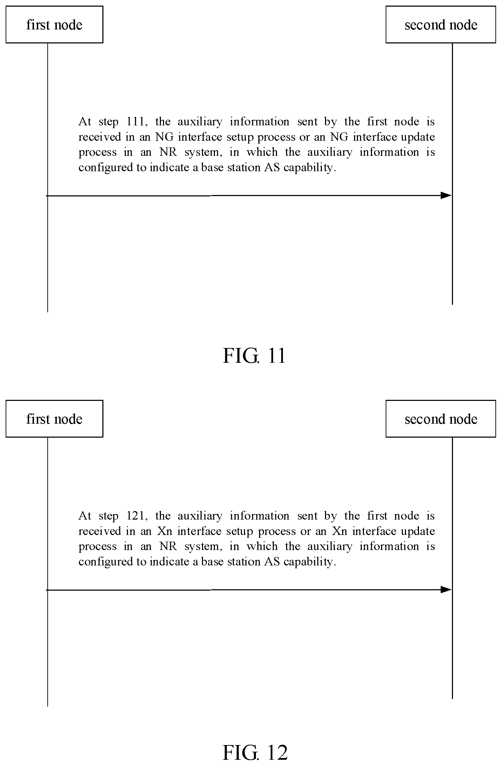

As shown in FIG 11, a method for negotiating a paging is provided in the embodiment. The method is performed by a second node and includes a following step.

At step 111, the auxiliary information sent by the first node is received in an NG interface setup process or an NG interface update process in an NR system.

The auxiliary information is configured to indicate a base station AS capability.

In an embodiment, the first node is a base station and the second node is a network function in a core network; and the auxiliary information sent by the first node is received in the NG interface setup process or the NG interface update process in the NR system, in which the auxiliary information is configured to indicate the base station AS capability.

In an embodiment, the first node is a base station and the second node is a network function in a core network; and the auxiliary information sent by the first node is received via an NG setup request message in the NG interface setup process or the NG interface update process in the NR system, in which the auxiliary information is configured to indicate the base station AS capability.

In an embodiment, the first node is a base station and the second node is a network function in a core network; and the auxiliary information sent by the first node is received via a radio access configuration update message in the NG interface setup process or the NG interface update process in the NR system, in which the auxiliary information is configured to indicate the base station AS capability.

It should be noted that those skilled in the art may understand that the method in embodiments of the present disclosure may be executed alone, or together with some methods in embodiments of the present disclosure or together with some.

As shown in FIG 12, a method for negotiating a paging is provided in the embodiment. The method is performed by a second node and includes a following step.

At step 121, the auxiliary information sent by the first node is received in an Xn interface setup process or an Xn interface update process in an NR system.

The auxiliary information is configured to indicate a base station AS capability.

In an embodiment, the first node is a service base station and the second node is an adjacent base station; and the auxiliary information sent by the first node is received in an Xn interface setup process or an Xn interface update process in an NR system, in which the auxiliary information is configured to indicate a base station AS capability.

In an embodiment, the first node is a service base station and the second node is an adjacent base station; and the auxiliary information sent by the first node is received via an Xn setup request message in the Xn interface setup process or the Xn interface update process in the NR system, in which the auxiliary information is configured to indicate the base station AS capability.

In an embodiment, the first node is a service base station and the second node is an adjacent base station; and the auxiliary information sent by the first node is received via an Xn setup response message in the Xn interface setup process or the Xn interface update process in the NR system, in which the auxiliary information is configured to indicate the base station AS capability.

In an embodiment, the first node is a service base station and the second node is an adjacent base station; and the auxiliary information sent by the first node is received via an NG-RAN node configuration update message in the Xn interface setup process or the Xn interface update process in the NR system, in which the auxiliary information is configured to indicate the base station AS capability.

In an embodiment, the first node is a service base station and the second node is an adjacent base station; and the auxiliary information sent by the first node is received via an NG-RAN node configuration update response message in the Xn interface setup process or the Xn interface update process in the NR system, in which the auxiliary information is configured to indicate the base station AS capability.

It should be noted that those skilled in the art may understand that the method in embodiments of the present disclosure may be executed alone, or together with some methods in embodiments of the present disclosure or together with some.

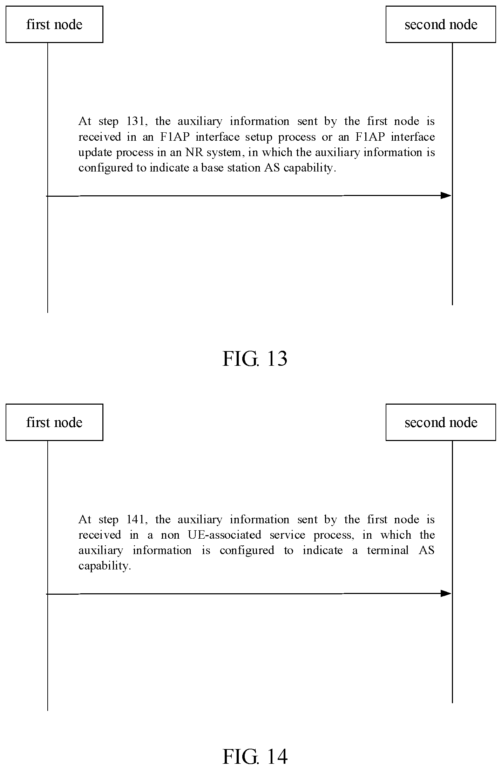

As shown in FIG 13, a method for negotiating a paging is provided in the embodiment. The method is performed by a second node and includes a following step. At step 131, the auxiliary information sent by the first node is received in an F1AP interface setup process or an F1AP interface update process in an NR system.

The auxiliary information is configured to indicate a base station AS capability.

In an embodiment, the first node is a base station CU and the second node is a base station DU; and the auxiliary information sent by the first node is received in the F1AP interface setup process or the F1AP interface update process in the NR system.

The auxiliary information is configured to indicate the base station AS capability.

In an embodiment, the first node is a base station CU and the second node is a base station DU; and the auxiliary information sent by the first node is received via an F1 setup request message in the F1AP interface setup process or the F1AP interface update process in the NR system, in which the auxiliary information is configured to indicate the base station AS capability.

In an embodiment, the first node is a base station CU and the second node is a base station DU; and the auxiliary information sent by the first node is received via a GNB-DU configuration update message in the F1AP interface setup process or the F1AP interface update process in the NR system, in which the auxiliary information is configured to indicate the base station AS capability.

**It** should be noted that those skilled in the art may understand that the method in embodiments of the present disclosure may be executed alone, or together with some methods in embodiments of the present disclosure or together with some.

**As** shown in FIG 14, a method for negotiating a paging is provided in the embodiment. The method is performed by a second node and includes a following step.

**At** step 141, the auxiliary information sent by the first node is received in a non-UE-associated service process.

The auxiliary information is configured to indicate a terminal AS capability.

In an embodiment, the auxiliary information sent by the first node is received in the non-UE-associated service process, in which the auxiliary information is configured to indicate the terminal AS capability.

In an embodiment, the auxiliary information sent by the first node is received via a UERadioPagingInformation message in the non-UE-associated service process, in which the auxiliary information is configured to indicate the terminal AS capability. The first node is a base station and the second node is a network function of a core network. One field may be added to an information field of the UERadioPagingInformation message. The field indicates that the terminal is a RedCap terminal in version R18.

In an embodiment, the auxiliary information sent by the first node is received via a paging message in a non-UE-associated service process, in which the auxiliary information is configured to indicate a terminal AS capability.

In an embodiment, the auxiliary information sent by the first node is received via a core network paging message in the non-UE-associated service process, in which the auxiliary information is configured to indicate the terminal AS capability. The first node is the network function of the core network and the second node is the base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18.

In an embodiment, the auxiliary information sent by the first node is received via a radio access network paging message in the non-UE-associated service process, in which the auxiliary information is configured to indicate the terminal AS capability. The first node is an anchor base station and the second node is a service base station. The auxiliary information indicates a terminal attribute. The terminal attribute indicates that a target terminal of paging is a RedCap terminal with 1RX antenna or a RedCap terminal with 2RX antenna, or the terminal attribute indicates a RedCap terminal in version R18.

It should be noted that those skilled in the art may understand that the method in embodiments of the present disclosure may be executed alone, or together with some methods in embodiments of the present disclosure or together with some.

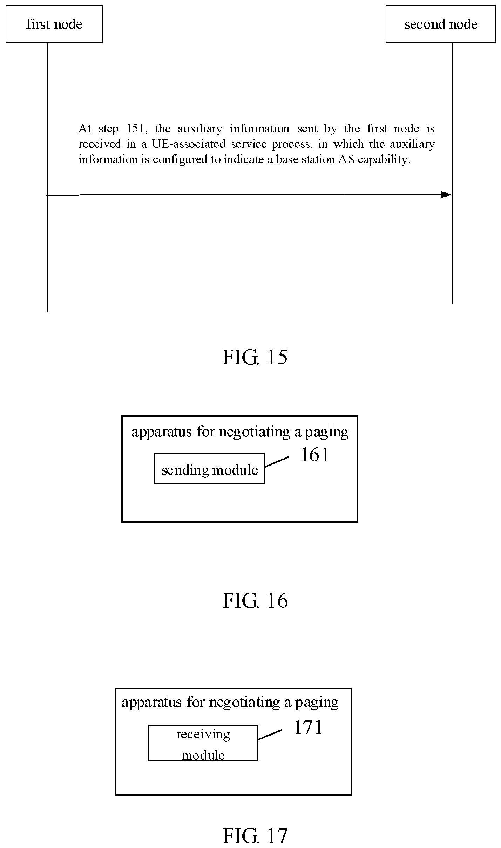

As shown in FIG 15, a method for negotiating a paging is provided in the embodiment. The method is performed by a second node and includes a following step.

At step 151, the auxiliary information sent by the first node is received in a UE-associated service process.

The auxiliary information is configured to indicate a base station AS capability.

In an embodiment, the auxiliary information is sent to the second node in the UE-associated service process, in which the auxiliary information is configured to indicate the base station AS capability.

In an embodiment, the first node is a base station and the second node is a network function in a core network; and the auxiliary information sent by the first node is received in an NG-based handover process in an NR system, in which the auxiliary information is configured to indicate the base station AS capability.

In an embodiment, the first node is a target base station and the second node is a service base station; and the auxiliary information sent by the first node is received in an Xn-based handover process in an NR system, in which the auxiliary information is configured to indicate the base station AS capability.

In an embodiment, the first node is a base station and the second node is network function in a core network; and the auxiliary information sent by the first node is received via a handover failure message in the NG-based handover process in the NR system, in which the auxiliary information is configured to indicate the base station AS capability.

In an embodiment, the first node is a target base station and the second node is a service base station; and the auxiliary information sent by the first node is received via a handover failure message in the Xn-based handover process in the NR system, in which the auxiliary information is configured to indicate the base station AS capability.

**In** an embodiment, the auxiliary information is indicated by a cause value of a handover failure.

It should be noted that those skilled in the art may understand that the method in embodiments of the present disclosure may be executed alone, or together with some methods in embodiments of the present disclosure or together with some.

As shown in FIG 16, an apparatus for negotiating a paging is provided in the embodiment. The apparatus includes a sending module 161.

The sending module 161 is configured to send auxiliary information to a second node, in which the auxiliary information is configured to indicate an AS capability.

It should be noted that those skilled in the art may understand that the method in embodiments of the present disclosure may be executed alone, or together with some methods in embodiments of the present disclosure or together with some.

As shown in FIG 17, an apparatus for negotiating a paging is provided in the embodiment. The apparatus includes a receiving module 171.

The receiving module 171 is configured to receive auxiliary information sent by a first node, in which the auxiliary information is configured to indicate an AS capability.

It should be noted that those skilled in the art may understand that the method in embodiments of the present disclosure may be executed alone, or together with some methods in embodiments of the present disclosure or together with some.

The embodiments of the present disclosure provide a communication device, including:
a processor;
a memory for storing instructions executable by the processor;
in which, the processor is configured to implement the method according to any one of embodiments of the present disclosure, when running the executable instructions.

The processor may include various types of storage media. The storage medium is a non-transitory computer storage medium that can continuously save and store information on the communication device after the communication device is powered off.

The processor may be connected to the memory via a bus, and the processor is configured to read executable programs stored on the memory.

The embodiments of the present disclosure also provide a computer storage medium, in which the computer storage medium stores a computer executable program. When the computer executable program is executed by a processor, the method according to any one of embodiments of the present disclosure is implemented.

With respect to the apparatus in the above embodiments, specific implementations in which each module performs an operation has been described in detail in the method embodiments and will not be elaborated here.

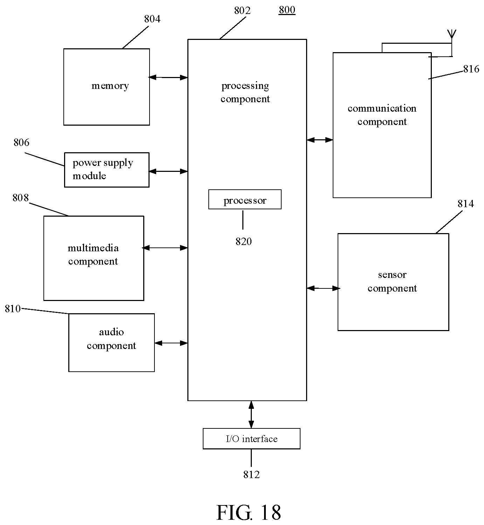

As shown in FIG 18, an embodiment of the present disclosure provides a structure of a terminal.

Referring to FIG 18, embodiments of the present disclosure provide a terminal 800, which may be a mobile phone, a computer, a digital broadcast terminal, a message sending and receiving device, a game console, a tablet device, a medical device, a fitness device, a personal digital assistant, etc.

Referring to FIG 18, the terminal 800 may include one or more processing components 802, memories 804, power supply modules 806, multimedia components 808, audio components 810, input/output (I/O) interfaces 812, sensor components 814, and communication components 816.

The processing component 802 typically controls the overall operation of the terminal 800, such as those associated with an on screen display, a telephone call, a data communication, a camera operation, and a recording operation. The processing component 802 may include one or more processors 820 to execute instructions to generate all or part of steps of the above method. In addition, the processing component 802 may include one or more modules to facilitate the interaction between the processing component 802 and other components. For example, the processing component 802 may include a multimedia module to facilitate the interaction between the multimedia component 808 and the processing component 802.

The memory 804 is configured to store various types of data to support operations on the terminal 800. Examples of these data include instructions of any application or method used to operate on the terminal 800, contact data, phone book data, messages, pictures, videos, etc. The memory 804 can be implemented by any type of volatile or non-volatile memory or a combination of them, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or CD.

The power supply module 806 provides power to the various components of the terminal 800. The power supply module 806 may include a power management system, one or more power supplies, and other components associated with generating, managing, and distributing power for the terminal 800.

The multimedia component 808 includes a screen that provides an output interface between the terminal 800 and the user. In some embodiments, the screen may include a liquid crystal display (LCD) and a touch panel (TP). If the screen includes a TP, the screen can be a touch screen to receive signals input by the user. The touch panel includes one or more touch sensors to sense a touch, swiping, and gesture on the touch panel. The touch sensor can not only sense the boundary of a touch or sliding action, but also detect the duration and pressure associated with the touch or sliding operation. In some embodiments, the multimedia component 808 includes a front camera and/or a rear camera. When the terminal 800 is in an operating mode, such as a shooting mode or a video mode, the front camera and/or the rear camera can receive external multimedia data. Each front camera or each rear camera can be a fixed optical lens system or has a focal length and an optical zoom capability.

The audio component 810 is configured to output and/or input audio signals. For example, the audio component 810 includes a microphone (MIC) that is configured to receive external audio signals when the terminal 800 is in an operational mode, such as a call mode, a recording mode, and a speech recognition mode. The received audio signal can be further stored in the memory 804 or transmitted via a communication component 816. In some embodiments, the audio component 810 also includes a speaker for the output of an audio signal.

The I/O interface 812 provides an interface between the processing component 802 and a peripheral interface module. The peripheral interface module may be a keyboard, a click wheel, a button, etc. The button may include, but is not limited to: a home button, a volume button, a start button, and a locking button.

The sensor component 814 includes one or more sensors to provide a condition assessment of various aspects of the terminal 800. For example, the sensor component 814 can detect an on/off state of the terminal 800, and a relative positioning of the component. For example, the component is a display and a keypad of the terminal 800, the sensor component 814 can also detect a change of the position of the terminal 800 or a change of one component of the terminal 800, detect a presence or an absence of a contact between the user and with the terminal 800, detect a direction of the terminal 800, or detect an acceleration/deceleration and detect a temperature change of the terminal 800. The sensor component 814 may include a proximity sensor configured to detect the presence of nearby objects without any physical contact. The sensor component 814 may also include an optical sensor, such as a CMOS or CCD image sensor, for using in an imaging application. In some embodiments, the sensor component 814 may also include an acceleration sensor, a gyroscope sensor, a magnetic sensor, a pressure sensor, or a temperature sensor.

The communication component 816 is configured to facilitate a wired or wireless communication between the terminal 800 and other devices. The terminal 800 can access a wireless network based on a communication standard, such as WiFi, 2G or 3G, or a combination of them. In one exemplary embodiment, the communication component 816 receives a broadcast signal or broadcast-related information from an external broadcast management system via a broadcast channel. In an exemplary embodiment, the communication component 816 also includes a near-field communication (NFC) module to facilitate a short-range communication. For example, the NFC module can be implemented based on a radio frequency identification (RFID) technology, an infrared data association (IrDA) technology, an ultra-wide band (UWB) technology, a bluetooth (BT) technology and other technologies.

In exemplary embodiments, the terminal 800 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic components to perform the above methods.

In exemplary embodiments, a non-transitory computer readable storage medium including instructions is also provided, such as a memory 804 including instructions. The instructions may be executed by the processor 820 of the terminal 800 to implement the above methods. For example, the non-transitory computer readable storage medium may be a read-only memory (ROM), a random access memory (RAM), a compact disc read-only memory (CD-ROM), a magnetic tape, a floppy disk, and an optical data storage device.

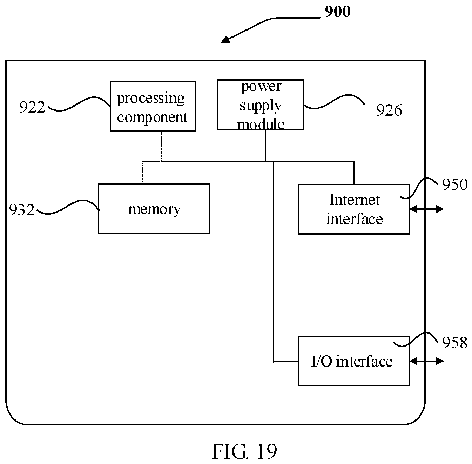

As shown in FIG 19, the embodiments of the present disclosure provide a structure of a base station. For example, the base station 900 can be provided as a network-side device. Referring to FIG 19, the base station 900 includes a processing component 922, which further includes one or more processors, and a memory resource represented by the memory 932 for storing instructions that can be executed by the processing component 922, such as an application program. The application stored in the memory 932 may include one or more modules, in which each corresponds to a set of instructions. In addition, the processing component 922 is configured to execute instructions to implement any one of the above methods that can be applied to the terminal.

The base station 900 may also include a power supply module 926 configured to perform power management for the base station 900, a wired or wireless network interface 950 configured to connect the base station 900 to the network, and an I/O interface 958. The base station 900 can operate an operating system stored on the memory 932, such as a Windows Server TM, a Mac OS XTM, a UnixTM, a LinuxTM, a FreeBSDTM, and so on.

Other embodiments of the present disclosure will be apparent to those skilled in the art from consideration of the specification and practice of the present disclosure disclosed here. This application is intended to cover any variations, uses, or adaptations of the present disclosure following the general principles thereof and including such departures from the present disclosure as come within known or customary practice in the art. It is intended that the specification and examples be considered as exemplary only, with a true scope and spirit of the present disclosure being indicated by the following claims.

**It** should be understood that the present disclosure is not limited to the precise structure described above and shown in attached drawings, and various modifications and alterations may be made without going beyond the scope of the present disclosure. Therefore, the protection scope of the disclosure shall be subject to claims.

## Claims

1. A method for negotiating a paging, performed by a first node, comprising:
sending auxiliary information to a second node, wherein the auxiliary information is configured to indicate an access stratum (AS) capability.

2. The method according to claim 1, wherein sending the auxiliary information to the second node comprises:
sending the auxiliary information to the second node in a non-UE-associated service process,
wherein the auxiliary information is configured to indicate a base station AS capability.

3. The method according to claim 2, wherein the first node is a base station and the second node is a network function in a core network, wherein sending the auxiliary information to the second node in the non-UE-associated service process comprises:
sending the auxiliary information to the second node in a next generation (NG) interface setup process or an NG interface update process in a new radio (NR) system.

4. The method according to claim 3, wherein sending the auxiliary information to the second node comprises:
sending the auxiliary information to the second node via an NG setup request message;
or,
sending the auxiliary information to the second node via a radio access configuration update message.

5. The method according to claim 2, wherein the first node is a service base station and the second node is an adjacent base station, sending the auxiliary information to the second node in the non-UE-associated service process comprises:
sending the auxiliary information to the second node in an Xn interface setup process or an Xn interface update process in an NR system.

6. The method according to claim 5, wherein sending the auxiliary information to the second node comprises:
sending the auxiliary information to the second node via an Xn setup request message;
or,
sending the auxiliary information to the second node via an Xn setup response message;
or,
sending the auxiliary information to the second node via a next generation-radio access network (NG-RAN) node configuration update message;
or,
sending the auxiliary information to the second node via an NG-RAN node configuration update response message.

7. The method according to claim 2, wherein the first node is a base station central unit (CU) and the second node is a base station distributed unit (DU), sending the auxiliary information to the second node in the non-UE-associated service process comprises:
sending the auxiliary information to the second node in an F1 application protocol (F1AP) interface setup process or an F1AP interface update process in an NR system.

8. The method according to claim 7, wherein sending the auxiliary information to the second node comprises:
sending the auxiliary information to the second node via an F1 setup request message;
or,
sending the auxiliary information to the second node via a next generation node B-distributed unit (GNB-DU) configuration update message.

9. The method according to claim 1, wherein the auxiliary information indicates the AS capability with a base station as a granularity; or, the auxiliary information indicates the AS capability with a cell as a granularity.

10. The method according to claim 1, wherein the auxiliary information indicates an identifier of whether a predefined type terminal is allowed or not allowed to access.

11. The method according to claim 10, wherein the identifier is determined based on at least one of following system messages:
a master indication block (MIB);
a system information block 1 (SIB 1); or
an SIB1-bis.

12. The method according to claim 1, wherein sending the auxiliary information to the second node comprises:
sending the auxiliary information to the second node in a non-UE-associated service process,
wherein the auxiliary information is configured to indicate a terminal AS capability.

13. The method according to claim 12, wherein sending the auxiliary information to the second node comprises:
sending the auxiliary information to the second node via a UERadioPagingInformation message;
or,
sending the auxiliary information to the second node via a paging message.

14. The method according to claim 13, wherein sending the auxiliary information to the second node via the paging message comprises:
sending the auxiliary information to the second node via a core network paging message;
or,
sending the auxiliary information to the second node via a radio access network paging message.

15. The method according to claim 1, wherein sending the auxiliary information to the second node comprises:
sending the auxiliary information to the second node in a UE-associated service process,
wherein the auxiliary information is configured to indicate a base station AS capability.

16. The method according to claim 15, wherein the first node is a base station and the second node is a network function of a core network, sending the auxiliary information to the second node in the UE-associated service process comprises:
sending the auxiliary information to the second node in an NG-based handover process in an NR system.

17. The method according to claim 15, wherein the first node is a target base station and the second node is a service base station, sending the auxiliary information to the second node in the UE-associated service process comprises:
sending the auxiliary information to the second node in an Xn-based handover process in an NR system.

18. The method according to claim 16 or 17, wherein sending the auxiliary information to the second node comprises:
sending the auxiliary information to the second node via a handover failure message.

19. A method for negotiating a paging, performed by a second node, comprising:
receiving auxiliary information sent by a first node, wherein the auxiliary information is configured to indicate an access stratum (AS) capability.

20. The method according to claim 19, wherein receiving the auxiliary information sent by the first node comprises:
receiving the auxiliary information sent by the first node in a non-UE-associated service process,
wherein the auxiliary information is configured to indicate a base station AS capability.

21. The method according to claim 20, wherein a first node is a base station and the second node is a network function in a core network, receiving the auxiliary information sent by the first node in the non-UE-associated service process comprises:
receiving the auxiliary information sent by the first node in a next generation (NG) interface setup process or an NG interface update process in a new radio (NR) system.

22. The method according to claim 21, wherein receiving the auxiliary information sent by the first node comprises:
receiving the auxiliary information sent by the first node via an NG setup request message;
or,
receiving the auxiliary information sent by the first node via a radio access configuration update message.

23. The method according to claim 20, wherein the first node is a service base station and the second node is an adjacent base station, receiving the auxiliary information sent by the first node in the non-UE-associated service process comprises:
receiving the auxiliary information sent by the first node in an Xn interface setup process or an Xn interface update process in an NR system.

24. The method according to claim 23, wherein receiving the auxiliary information sent by the first node comprises:
receiving the auxiliary information sent by the first node via an Xn setup request message;
or,
receiving the auxiliary information sent by the first node via an Xn setup response message;
or,
receiving the auxiliary information sent by the first node via a next generation-radio access network (NG-RAN) node configuration update message;
or,
receiving the auxiliary information sent by the first node via an NG-RAN node configuration update response message.

25. The method according to claim 20, wherein the first node is a base station central unit (CU) and the second node is a base station distributed unit (DU), receiving the auxiliary information sent by the first node in the non-UE-associated service process comprises:
receiving the auxiliary information sent by the first node in an F1 application protocol (F1AP) interface setup process or an F1AP interface update process in an NR system.

26. The method according to claim 25, wherein receiving the auxiliary information sent by the first node comprises:
receiving the auxiliary information sent by the first node via an F1 setup request message;
or,
receiving the auxiliary information sent by the first node via a next generation node B-distributed unit (GNB-DU) configuration update message.

27. The method according to claim 19, wherein the auxiliary information indicates the AS capability with a base station as a granularity; or, the auxiliary information indicates the AS capability with a cell as a granularity.

28. The method according to claim 19, wherein the auxiliary information indicates an identifier of whether a predefined type terminal is allowed or not allowed to access.

29. The method according to claim 28, wherein the identifier is determined based on at least one of following system messages:
a master indication block (MIB);
a system information block 1 (SIB 1); or
an SIB1-bis.

30. The method according to claim 19, wherein receiving the auxiliary information sent by the first node comprises:
receiving the auxiliary information sent by the first node in a non-UE-associated service process,
wherein the auxiliary information is configured to indicate a terminal AS capability.

31. The method according to claim 30, wherein receiving the auxiliary information sent by the first node comprises:
receiving the auxiliary information sent by the first node via a UERadioPagingInformation message;
or,
receiving the auxiliary information sent by the first node via a paging message.

32. The method according to claim 31, wherein receiving the auxiliary information sent by the first node via the paging message comprises:
receiving the auxiliary information sent by the first node via a core network paging message;
or,
receiving the auxiliary information sent by the first node via a radio access network paging message.

33. The method according to claim 19, wherein receiving the auxiliary information sent by the first node comprises:
receiving the auxiliary information sent by the first node in a UE-associated service process,
wherein the auxiliary information is configured to indicate a base station AS capability.

34. The method according to claim 33, wherein the first node is a base station and the second node is a network function of a core network, receiving the auxiliary information sent by the first node in the UE-associated service process comprises:
receiving the auxiliary information sent by the first node in an NG-based handover process in an NR system.

35. The method according to claim 33, wherein the first node is a target base station and the second node is a service base station, receiving the auxiliary information sent by the first node in the UE-associated service process comprises:
receiving the auxiliary information sent by the first node in an Xn-based handover process in an NR system.

36. The method according to claim 34 or 35, wherein receiving the auxiliary information sent by the first node comprises:
receiving the auxiliary information sent by the first node via a handover failure message.

37. An apparatus for negotiating a paging, comprising:
a sending module, configured to send auxiliary information to a second node, wherein the auxiliary information is configured to indicate an access stratum (AS) capability.

38. An apparatus for negotiating a paging, comprising:
a receiving module, configured to receive auxiliary information sent by a first node, wherein the auxiliary information is configured to indicate an access stratum (AS) capability.

39. A communication device, comprising:
a memory; and
a processor, connected with the memory, configured to execute computer executable instructions stored on the memory, and implement the method according to any one of claims 1 to 18 or claims 19 to 36.

40. A computer storage medium for storing computer executable instructions, wherein when the computer executable instructions are executed by a processor, the method according to any one of claims 1 to 18 or claims 19 to 36 is implemented.
